# FASCICULE DE BREVET EUROPEEN

(11) **EP 1 772 670 B1**
(45) Date de publication et mention de la délivrance du brevet: **16.04.2008**
(21) Numéro de dépôt: 06300996.3
(22) Date de dépôt: 28.09.2006
(51) Int. Cl.: F23C 10/10, F23L 7/00

(54) **Réacteur à lit fluidise circulant à procédé de combustion convertible**
Zirkulierende Wirbelschichtfeuerungsanlage mit umwandelbarem Verbrennungsverfahren
Circulating fluidised bed furnace provided with a convertible combustion process

(30) Priorité: 07.10.2005 FR 0553050
(43) Date de publication de la demande: 11.04.2007
(73) Titulaire: Alstom Technology Ltd, 5400 Baden (CH)
(72) Inventeur: Morin, Jean-Xavier, 45170 Neuville aux Bois (FR); Suraniti, Silvestre, 13100 Aix en Provence (FR); Beal, Corinne, 78690 Voisins le Bretonneux (FR); Flores, Emmanuel, 38240 Meylan (FR); Baglione, Daniel, 94250 Gentilly (FR)
(74) Mandataire: Feray, Valérie

(56) Documents cités:
- WO-A-03/038338
- WO-A-20/04036118
- US-B1- 6 505 567

## Description

La présente invention concerne un réacteur à lit fluidisé circulant à procédé de combustion convertible.

Le développement de nouvelles réglementations limitant les émissions de gaz à effet de serre, dont fait partie le dioxyde de carbone dans les centrales à combustibles carbonés fossiles amène à mettre en oeuvre des technologies de capture du dioxyde de carbone contenu dans les fumées de combustion à l'air.

La technologie de capture du dioxyde de carbone fréquemment mise en oeuvre consiste à laver les fumées diluées par l'azote de l'air de combustion à l'aide de solvants qui absorbent le dioxyde de carbone puis le restituent en courant gazeux concentré de dioxyde de carbone après régénération du solvant par chauffage.

Ce procédé absorbe une énergie importante et dégrade de façon très importante le rendement des centrales à combustibles carbonés fossiles, à savoir en diminuant le rendement de plus de quinze points.

Il est connu des brevets US 4 498 289 et US 5 175 995 d'utiliser en tant qu'agent comburant de l'oxygène au lieu de l'air dans des chaudières de production.

L'avantage de l'utilisation d'oxygène en tant qu'agent comburant est la réduction jusqu'à l'élimination du ballast en azote diluant le dioxyde de carbone contenu dans les fumées et provenant de l'azote contenu dans l'air de combustion, ainsi que la réduction importante des dimensions de l'équipement nécessaire résultant d'un débit de fumées de combustion correspondant à 35%-40% du débit typique de fumées de combustion à l'air.

L'application de ce principe à une chaudière à lit fluidisé circulant est divulguée dans le brevet US 6 505 567. Selon ce document, un générateur de vapeur ou foyer à lit fluidisé circulant comprend des moyens d'introduction d'oxygène sensiblement pur dans le générateur.

L'avantage de la technique à lit fluidisé circulant est qu'elle permet d'extraire de la chaleur sur la boucle des solides en circulation et de conserver une température de combustion basse, découplée de la teneur en oxygène de l'agent comburant. Cette technique est donc particulièrement attractive et permet de maximiser la fraction d'oxygène dans l'agent comburant et de minimiser la taille de la chaudière dépendant directement du débit de fumées produites.

Cependant, selon cet art antérieur, aucun moyen de conversion efficace d'un réacteur à lit fluidisé circulant fonctionnant à l'air en réacteur à lit fluidisé circulant fonctionnant à l'oxygène n'est fourni.

L'objet de l'invention est de fournir un réacteur à lit fluidisé circulant conçu spécifiquement pour fonctionner en combustion à l'air et permettant par un minimum de modifications structurelles d'être transformé afin de devenir un lit fluidisé circulant efficace pour un fonctionnement en combustion à l'oxygène et au dioxyde de carbone recyclé.

Pour ce faire, l'invention propose un réacteur à lit fluidisé circulant destiné à être alimenté en air et pouvant être converti pour pouvoir fonctionner avec un mélange riche en oxygène, comportant une chambre de réaction délimitée horizontalement par des parois verticales, au moins deux séparateurs centrifuges et un élément de récupération de chaleur appelé cage d'échangeurs, réacteur comprenant également des moyens d'introduction d'un gaz de fluidisation dans la chambre de réaction au moyen d'au moins une boîte à vent situé sous la chambre de réaction et de maintien d'un lit fluidisé circulant de particules dans cette chambre, des moyens de transfert du gaz qui doit être dépoussiéré à partir de la chambre vers les séparateurs, des moyens de décharge des particules séparées à partir des séparateurs et des moyens de transfert des gaz dépoussiérés à partir des séparateurs dans la cage d'échangeurs, réacteur caractérisé en ce que
- ladite chambre de réaction comporte au moins une paroi verticale de partition interne partielle formant deux sous-chambres communicantes entre elles et communicantes chacune avec au moins un séparateur,
- ladite cage d'échangeurs comporte une paroi verticale de partition interne partielle formant deux sous-cages communicantes entre elles et communicantes chacune avec au moins un séparateur,
   ces parois de partition étant disposées, afin de créer une section de passage des gaz de combustion dans une dites sous-chambres et dans une des dites sous-cages correspondant à un fonctionnement par alimentation d'oxygène dans la chambre de réaction.

Selon un mode de réalisation préféré, la section de l'une des dites sous-chambres est comprise entre 60 et 65 % de la section totale d ladite chambre, la section de l'autre sous-chambre étant comprise entre 35 et 40 %, ledit mélange riche en oxygène comportant 70 % d'oxygène et 30 % de dioxyde de carbone recyclé.

De préférence, ladite boîte à vent est divisée en deux sous-boîtes par une paroi disposée dans le même plan que ladite paroi de partition de la chambre de réaction.

Dans le cas où le réacteur comporte également au moins deux lits extérieurs destinés chacun à recevoir les particules en sortie de chaque séparateur grâce un canal d'alimentation en particules solides et comportant chacun une paroi pouvant être commune avec ladite chambre de réaction, avantageusement un agencement de siphon est disposé au moins partiellement à l'intérieur ladite chambre sur la longueur de ladite paroi pouvant être commune aux dits lits extérieurs et à ladite chambre de réaction.

De préférence, les cavités des dits lits extérieurs sont surdimensionnés, afin de présenter de l'espace libre pour ajout de 10 à 20% de surfaces d'échangeurs.

Les conduits d'alimentation en combustible sont de préférence surdimensionnés.

Selon une variante de réalisation, le réacteur comprend une chambre de réaction délimitée horizontalement par des parois verticales, deux séparateurs centrifuges et une cage d'échangeurs située à l'arrière de la chambre de réaction, les deux séparateurs étant latéraux et présentant chacun une paroi verticale commune avec la paroi latérale de la cage d'échangeurs, et ladite paroi de partition de ladite chambre est perpendiculaire à la paroi frontale de cette chambre et ladite paroi de partition de ladite cage d'échangeurs est parallèle à cette paroi de partition de ladite chambre.

Selon une autre variante de réalisation, le réacteur comprend une chambre de réaction délimitée horizontalement par des parois verticales, n séparateurs centrifuges pourvus de gaines de sortie de fumées reliant chaque paire de séparateurs à une cage d'échangeurs arrière et une cage d'échangeurs disposée à l'arrière de la chambre, n étant supérieure ou égale à 2, la chambre de réaction ayant chacune de ses parois verticales dites latérales pouvant être commune avec une paroi verticale dite latérale d'un ensemble de n/2 séparateurs, et ladite paroi de partition de ladite chambre est parallèle à la paroi frontale de cette dernière et ladite paroi de partition de ladite cage d'échangeurs est parallèle à cette paroi de partition de ladite chambre.

Dans ce cas, de préférence, les deux gaines de sortie de fumées reliant chaque dit ensemble de séparateurs à la cage d'échangeurs arrière sont équipées d'une paroi de partition verticale et partielle.

L'invention concerne également un procédé de conversion d'un réacteur à lit fluidisé circulant tel que précisé ci-dessus, afin de permettre son fonctionnement à l'oxygène et au dioxyde de carbone recyclé, caractérisé en ce qu'il comprend les étapes de transformation suivantes :
- fermeture complète et étanche de ladite paroi verticale de partition de la chambre de réaction pour former deux sous-chambres indépendantes, l'une, dite sous-chambre de combustion, destinée à former une chambre de combustion alimentée en oxygène et l'autre, dite sous-chambre de refroidissement, destinée au refroidissement des gaz de fluidisation desdits lits extérieurs,
- fermeture complète et étanche de ladite paroi verticale de partition de la cage pour former deux sous-cages indépendantes.

Selon un mode de réalisation préféré, ce procédé comporte également les étapes de transformation suivantes :
- condamnation de l'alimentation en particules solides par le ou les séparateurs correspondants, du ou des lit(s) extérieur(s) connecté(s) à ladite sous-chambre de refroidissement,
- obturation du passage entre ce ou ces lit(s) extérieur(s) et ladite sous-chambre de refroidissement,
- de chaque côté de la chambre, raccordement en série des canaux d'alimentation en particules solides de tous les lits extérieurs existants, à partir de l'alimentation du ou des lit(s) extérieur(s) connecté(s) à ladite sous-chambre de combustion,
- équipement de ces raccordements de vannes de régulation.

Avantageusement, le procédé comporte une étape de mise en place d'un agencement de siphon disposé au moins partiellement à l'intérieur de ladite chambre sur la longueur de ladite paroi pouvant être commune aux dits lits extérieurs et à ladite chambre de réaction.

De préférence, le procédé comprend les étapes de transformation suivantes :
- obturation des ouvertures de sortie du dit agencement de siphon à l'intérieur de ladite sous-chambre de refroidissement,
- réalisation d'ouvertures dans le plafond et/ou des parois du dit agencement de siphon à l'intérieur de ladite sous-chambre de refroidissement,
- fluidisation de l'agencement de siphon de sorte à assurer un transfert longitudinal des solides dans cet agencement.

Le procédé peut également comprendre l'obturation de toutes les alimentations en combustible et en air secondaire de ladite sous-chambre de refroidissement.

L'invention est décrite ci-après plus en détail à l'aide de figures ne représentant que des modes de réalisation préférés de l'invention.

Les figures 1 et 2 sont des vues en perspective d'un réacteur à lit fluidisé circulant conforme à l'invention, selon un premier mode de réalisation.

Les figures 3 et 4 sont des vues en perspective d'un réacteur à lit fluidisé circulant conforme à l'invention, selon un premier mode de réalisation, avec une chambre de réaction et une cage d'échangeurs ouverte afin de permettre la vision de leur intérieur.

Les figures 5A à 5C sont des vues en coupe horizontale, en partie haute d'un réacteur à lit fluidisé circulant conforme à l'invention, selon un premier mode de réalisation.

La figure 6 est en une vue en perspective schématique et partielle d'un réacteur à lit fluidisé circulant conforme à l'invention, selon un premier mode de réalisation.

Les figures 7A et 7B sont des vues en coupe verticales et en coupe horizontale, d'un réacteur à lit fluidisé circulant conforme à l'invention, selon un premier mode de réalisation.

Les figures 8A et 8B sont également des vues en coupe verticales et en coupe horizontale, d'un réacteur à lit fluidisé circulant conforme à l'invention, selon un premier mode de réalisation.

La figure 9 est une vue en perspective d'un réacteur à lit fluidisé circulant conforme à l'invention, selon un second mode de réalisation.

La figure 10 est une vue en coupe horizontale, en partie haute, d'un réacteur à lit fluidisé circulant conforme à l'invention, selon un second mode de réalisation.

Les figures 11A à 11 C sont des vues en coupe horizontale, en partie haute, d'un réacteur à lit fluidisé circulant conforme à l'invention, selon un second mode de réalisation.

La figure 12 est une vue en coupe, en partie basse, d'un réacteur à lit fluidisé circulant conforme à l'invention, selon un second mode de réalisation.

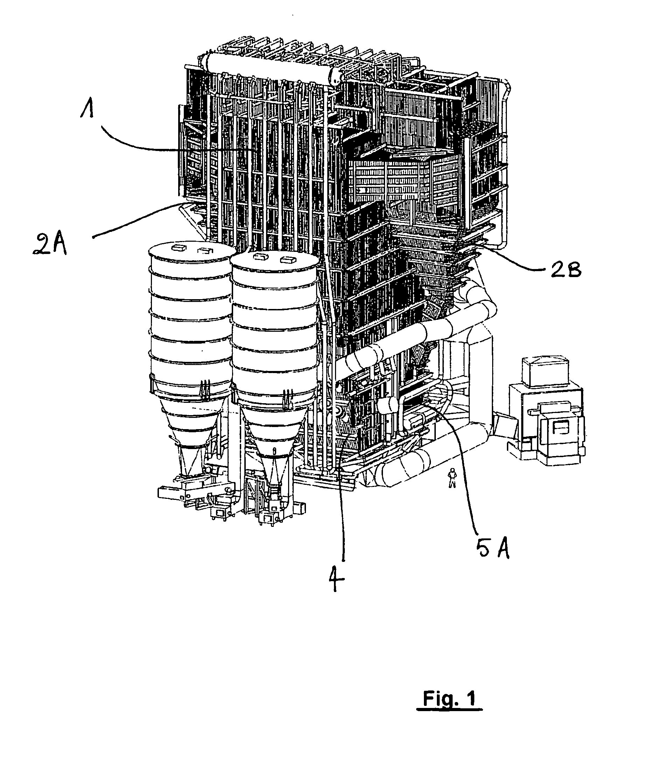

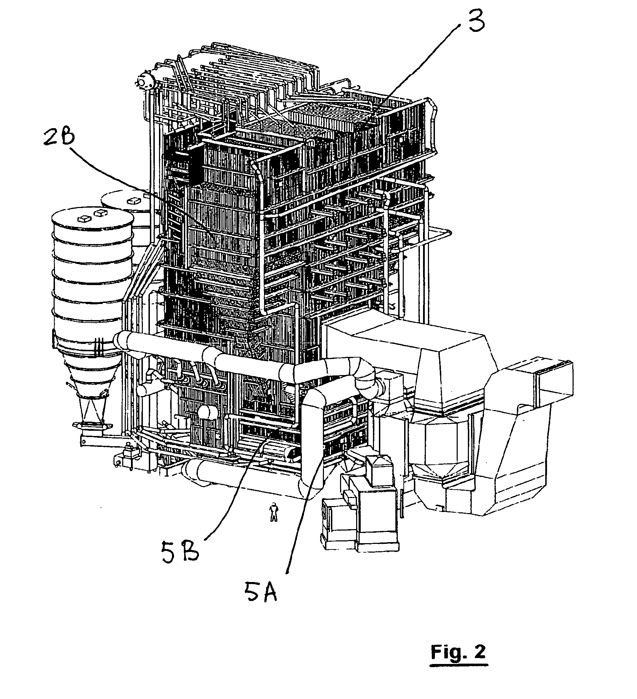

Selon le premier mode de réalisation décrit et illustré sur les figures 1 à 8, le lit fluidisé circulant est du type décrit dans le document de brevet WO 03/038338 déposée par la déposante.

Ce réacteur comporte une chambre de réaction 1 délimitée horizontalement par des parois verticales, deux séparateurs centrifuges 2A et 2B et un élément de récupération de chaleur appelé cage d'échangeurs 3 situé à l'arrière de la chambre de réaction. Ce réacteur comprend des moyens d'introduction d'un gaz de fluidisation dans la chambre de réaction de maintien d'un lit fluidisé circulant de particules dans cette chambre grâce à une boîte à vent 4 situé en dessous de la chambre 1. Il comprend également des moyens de transfert du gaz qui doit être dépoussiéré à partir de la chambre 1 vers les séparateurs 2A, 2B et des moyens de décharge des particules séparées à partir des séparateurs et des moyens de transfert des gaz dépoussiérés à partir des séparateurs dans la cage d'échangeurs 3. Ce réacteur comporte également deux lits extérieurs 5A et 5B destinés chacun à recevoir les particules en sortie de chaque séparateur grâce un canal d'alimentation en particules solides et comportant chacun une paroi commune avec la chambre de réaction 1.

Les deux séparateurs 2A, 2B sont latéraux et présentent chacun une paroi verticale commune avec la paroi latérale de la cage d'échangeurs 3.

Selon l'invention, ce réacteur à lit fluidisé circulant destiné à être alimenté en air est convertible pour pouvoir fonctionner avec un mélange riche en oxygène, de façon efficace et avec un minimum d'opérations de transformation.

De préférence, ce mélange riche en oxygène comporte 70 % d'oxygène et 30 % de dioxyde de carbone recyclé.

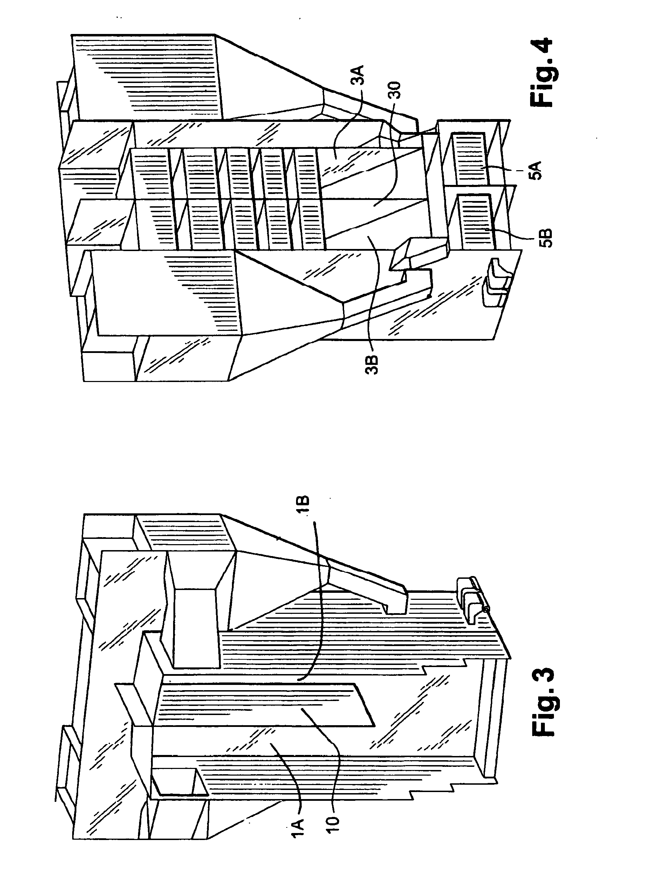

Pour ce faire, comme visible les figures 3 à 5, la chambre de réaction 1 comporte une paroi verticale de partition 10 interne partielle, en deux sous-chambres 1A et 1 B communicantes entre elles et communicantes chacune avec un séparateur. La cage d'échangeurs 3 comporte quant à elle une paroi verticale de partition 30 interne partielle, en deux sous-cages 3A, 3B communicantes entre elles et communicantes chacune avec au moins un séparateur.

Cette paroi de partition 10 de la chambre de réaction est perpendiculaire à la paroi frontale de la chambre et cette paroi de partition 30 de la cage d'échangeurs est parallèle à cette paroi de partition 10 de la chambre.

De façon générale, ces parois de partition 10, 30 sont disposées, afin de définir une section transversale d'une dites sous-chambres 1 B et d'une des dites sous-cages 3B correspondante à un fonctionnement par alimentation d'oxygène dans la chambre de réaction. Avantageusement, la section de l'une des dites sous-chambres 1 A est comprise entre 60 et 65 % de la section totale de la chambre 1, la section de l'autre sous-chambre 1 B étant comprise entre 35 et 40 %.

Ces parois de partition 10, 30, telles que représentées sur les figures, s'étendent du plafond vers le bas et laisse un passage libre dans le bas de la chambre de réaction 1 ou de la cage d'échangeurs 3. En variante, elles peuvent laisser un passage libre dans le haut de la chambre et/ou de la cage ou bien elles peuvent consister en des parois pourvues de plusieurs ouvertures, réparties ou non sur leur hauteur et disposées sur toute leur largeur ou non.

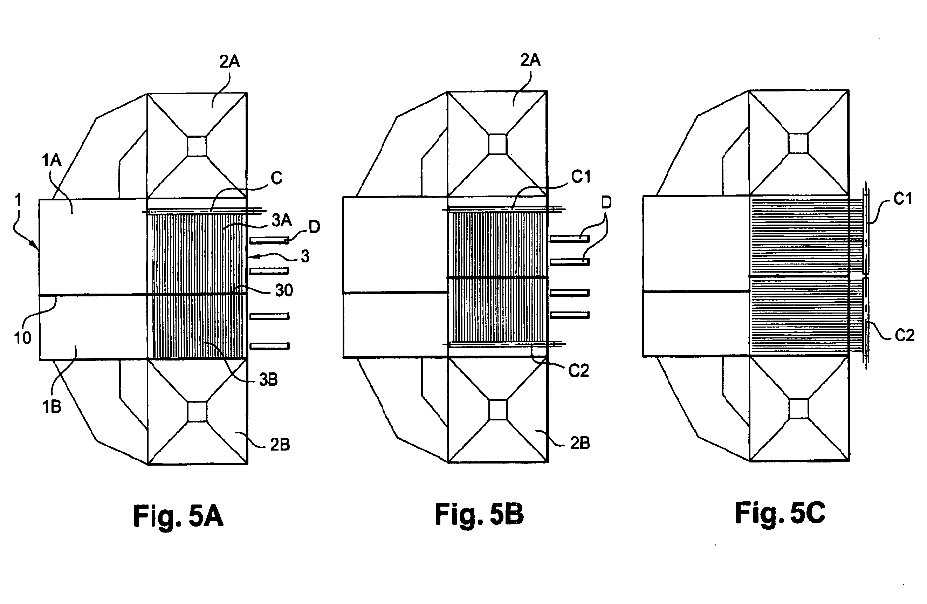

Au sein de la cage 3, les échangeurs peuvent être disposés parallèlement à la paroi frontale de la chambre 1 de sorte qu'ils traversent la paroi de partition 30 de la cage de façon étanche, comme illustré sur la figure 5A. Une seule rangée de collecteurs C est alors nécessaire disposée sur un bord latéral de la cage 3 et des appareils de dépoussiérage (ramoneurs) à la vapeur D peuvent permettre le nettoyage des deux sous cages et des échangeurs.

Les échangeurs peuvent également être disposés parallèlement à la paroi frontale de la chambre 1 de sorte qu'ils ne traversent pas la paroi de partition 30 de la cage, comme illustré sur la figure 5B. Deux rangées de collecteurs C1, C2 sont alors nécessaires disposés chacun sur un bord latéral de la cage 3 et des appareils de dépoussiérage (ramoneurs) à la vapeur D peuvent permettre le nettoyage des deux sous cages et des échangeurs.

Les échangeurs peuvent enfin être disposés perpendiculairement à la paroi frontale de la chambre 1, comme illustré sur la figure 5C. Deux rangées de collecteurs C sont alors nécessaires disposés à l'arrière de la cage 3 et des appareils de dépoussiérage (ramoneurs) à la vapeur ou à infrason, selon l'écart entre les échangeurs, peuvent permettre le nettoyage des deux sous cages et des échangeurs.

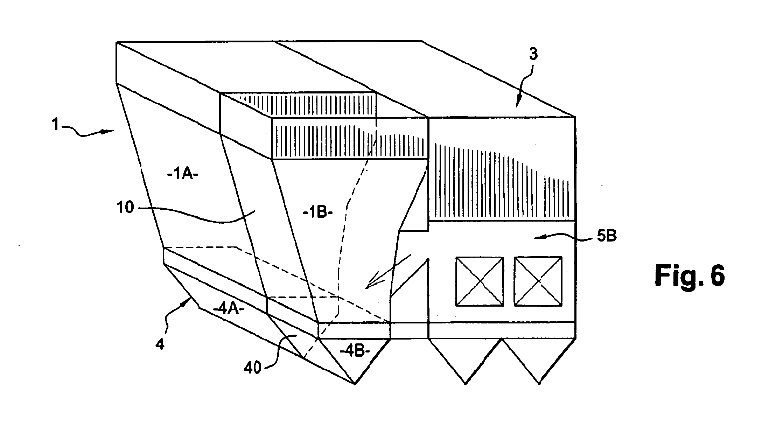

La boîte à vent 4, bien visible sur la figure 6, est divisée en deux sous-boîtes 4A, 4B par une paroi 40 disposée dans le même plan vertical que ladite paroi de partition 10 de la chambre de réaction 1.

En variante, il peut suffire qu'elle soit pré-équipée pour pouvoir être segmentée ultérieurement lors de la conversion du réacteur.

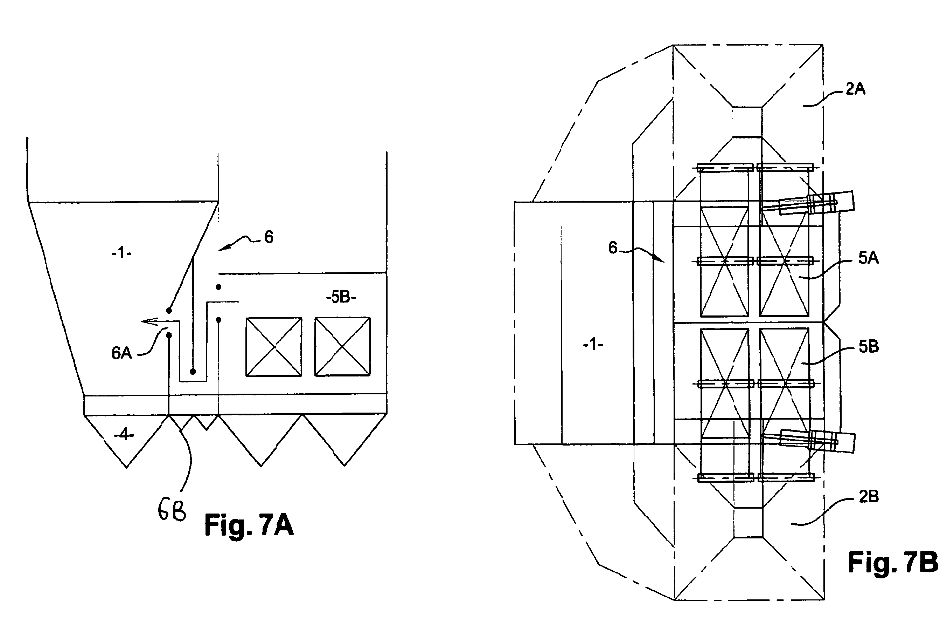

Comme illustré sur les figures 7A et 7B, un agencement de siphon 6 est disposé à l'intérieur la chambre de réaction 1 sur la longueur de la paroi commune aux lits extérieurs 5A, 5B et à la chambre de réaction 1. En fonctionnement non converti, soit en fonctionnement à l'air, il n'a pas de fonction spécifique et il assure le passage des solides à partir des lits extérieurs vers la chambre de réaction 1 au moyen d'ouvertures de sortie 6A agencées sur toute la largeur de la chambre de réaction 1. Il peut néanmoins être installé dès le montage du réacteur en fonctionnement à l'air, s'il est souhaité de diminuer et de simplifier les modifications à accomplir lors de la conversion du réacteur.

En variante, cet agencement de siphon 6 peut être installé ultérieurement lors de la conversion du réacteur.

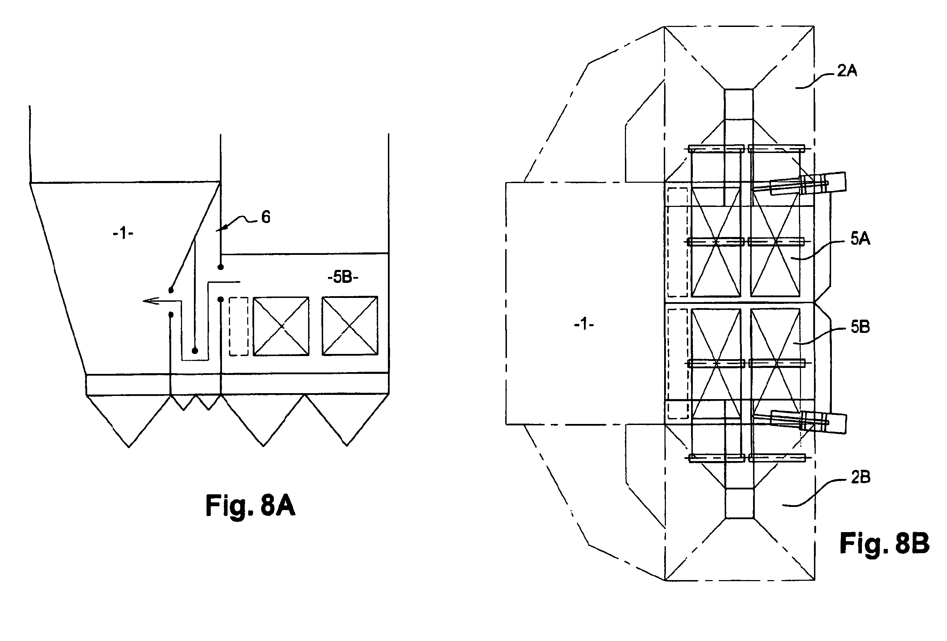

Comme illustré sur les figures 8A et 8B, les cavités des lits extérieurs 5A, 5B sont surdimensionnés dans leur longueur, afin de présenter de l'espace libre. Comme il sera vu plus loin, des échangeurs de vaporisation et/ou surchauffe seront en effet à ajouter dans ces lits pour permettre la conversion en fonctionnement à l'oxygène et au dioxyde de carbone recyclé.

Par ailleurs, les conduits d'alimentation en combustible sont surdimensionnés, afin de permettre le passage de 100 % du combustible après conversion dans la sous-chambre 1 B. Il en est de même des appareils de transport du combustible qui doivent permettre un débit injecté total après conversion dans la sous-chambre 1 B.

Un réacteur de combustion tel que précédemment décrit est destiné à fonctionner avec de l'air de combustion. Grâce à certain nombre de modifications qui vont maintenant être décrites, il peut être converti pour fonctionner avec de l'oxygène et du dioxyde de carbone recyclé. Le principe général de cette conversion est d'utiliser une seule sous-chambre de la chambre de réaction en tant que foyer ou chambre de combustion, d'utiliser le séparateur qui lui est connecté dans sa fonction première de séparation des gaz et des solides, de récupérer les gaz en sortie de ce séparateur dans une sous-cage de la cage d'échangeurs, de récupérer les solides en sortie de ce séparateur dans les deux lits extérieurs connectés pour être parcouru en parallèle par les solides et connectés en sortie à ladite chambre de combustion pour pouvoir lui transférer les solides et connectés en sortie à l'autre sous-chambre, dite chambre de refroidissement, pour pouvoir lui transférer le gaz de fluidisation, à savoir préférablement de l'azote.

Pour ce faire, le procédé de conversion d'un réacteur à lit fluidisé circulant tel que décrit ci-dessus, afin de permettre son fonctionnement à l'oxygène et du dioxyde de carbone recyclé, comprend les étapes de transformation suivantes :
- fermeture complète et étanche de la paroi verticale de partition 10 de la chambre de réaction pour former deux sous-chambres indépendantes, l'une 1 B, dite sous-chambre de combustion, de section comprise entre 35 et 40 % de la section de la chambre 1, destinée à former une chambre de combustion alimentée en oxygène et en dioxyde de carbone recyclé et l'autre 1A, dite sous-chambre de refroidissement, destinée au refroidissement des gaz de fluidisation des lits extérieurs 5A, 5B,
- fermeture complète et étanche de la paroi verticale de partition 30 de la cage pour former deux sous-cages indépendantes 3A, 3B,
- condamnation de l'alimentation en particules solides par le séparateur correspondant 2A, du lit extérieur 5A connecté à la sous-chambre de refroidissement 3A ; cette condamnation peut être effectuée par la fermeture de la vanne de régulation de débit solides prévue pour réguler le réacteur en fonctionnement à l'air ou par démontage de cette vanne et obturation du conduit correspondant,
- obturation du passage entre ce lit extérieur 5A et la sous-chambre de refroidissement 1 A,
- raccordement en série des canaux d'alimentation en particules solides des deux lits extérieurs existants 5A, 5B, à partir du lit 5B vers le lit extérieur 5A initialement connecté à la sous-chambre de combustion 1A;
- équipement de ce raccordement d'une vanne de régulation de débit solides, par exemple celle démontée plus haut peut être utilisée. La vanne est alors montée en extrémité du canal d'alimentation du lit extérieur 5B ayant une paroi commune avec la sous-chambre de combustion 1 B, afin de permettre une alimentation régulée du canal d'alimentation de l'autre lit 5A.

Lorsque l'agencement de siphon 6 avec ses boites à vent de fluidisation 6B, a déjà été installé sur le réacteur fonctionnant à l'air avant conversion, cet agencement de siphon est modifié selon les opérations suivantes, afin d'assurer en sortie des lits extérieurs, la séparation du circuit des solides et du circuit des gaz de fluidisation des lits extérieurs, à savoir préférablement de l'azote :
- obturation des ouvertures de sortie 6A de l'agencement de siphon à l'intérieur de la sous-chambre de refroidissement 1 A,
- réalisation d'ouvertures à l'entrée, dans le plafond et/ou une paroi du dit agencement de siphon 6 à l'intérieur de la sous-chambre de refroidissement 1 A,
- fluidisation de l'agencement de siphon 6 de sorte à assurer un transfert longitudinal des solides dans cet agencement, dans la direction allant du lit 5B adjacent à la sous-chambre de refroidissement vers le lit 5A adjacent à la sous-chambre de combustion; cette fluidisation est effectuée par du dioxyde de carbone recyclé et/ou de la vapeur d'eau,

Lorsque l'agencement de siphon n'a pas été installé sur le réacteur fonctionnant à l'air avant conversion, un agencement de siphon avec ses boîtes à vent de fluidisation 6B, présentant les caractéristiques ci-dessus, à savoir ouvertures de sortie des solides et ouvertures de sortie de sortie des gaz selon la sous-chambre, est installé dans la chambre de réaction.

Au cas où la boîte à vent 4 n'a pas été déjà équipée d'une paroi de partition, cette dernière 40 est montée. Seule la sous-boîte 4B situé sous la sous-chambre de combustion 1 B est utilisée et fluidisée en oxygène et/ou dioxyde de carbone recyclé.

Un dispositif d'extraction intermittente des dépôts éventuels de matière peut être prévu dans le bas de l'autre sous- boîte 4A située sous la sous-chambre de refroidissement 1A. Un tel dispositif d'extraction peut également être prévu dans le bas de la sous-chambre de refroidissement 1 A et à proximité de l'agencement de siphon en sortie du séparateur 2A destiné à être traversé par les gaz de fluidisation des lits extérieurs.

Le procédé de conversion comprend également l'obturation de toutes les alimentations en combustible et en air secondaire de combustion de la sous-chambre de refroidissement 1A, que ces alimentations soient situées dans la chambre de réaction ou dans l'agencement de siphon. Les alimentations en air secondaire de combustion de la sous-chambre de combustion 1 B sont quant à elles équipées de cannes d'injection en mélange riche en oxygène.

Des échangeurs de vaporisation et/o u surchauffe supplémentaires, de l'ordre de 10 à 20 %, sont mis en place dans l'espace libre des lits extérieurs 5A, 5B. Après conversion et lors du fonctionnement en mélange riche en oxygène, ces échangeurs remplacent la surface d'échange interne à la sous-chambre de refroidissement 1A qui n'est plus utilisée. Ces échangeurs peuvent dégager dans les circuits d'écrans afin d'éviter le recours à une pompe de circulation.

En aval de la cage d'échangeurs 3, le circuit initial des fumées est utilisé pour traiter les gaz évacués à partir des lits extérieurs. Un circuit séparé est ajouté afin de traiter les gaz de combustion contenant du dioxyde de carbone et de la vapeur d'eau et provenant du circuit de combustion du mélange riche en oxygène. Ce circuit ajouté comporte des gaines, des échangeurs gaz gaz, des dispositifs de filtrage, des ventilateurs et des condenseurs vers un train de traitement du dioxyde de carbone avant compression pour transport.

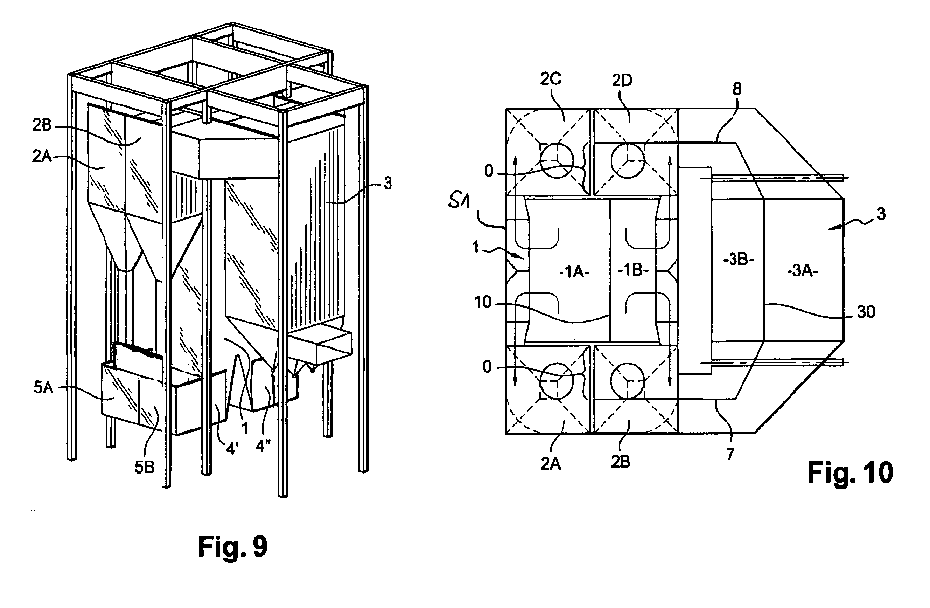

Selon le second mode de réalisation décrit et illustré sur les figures 9 à 12, le lit fluidisé circulant est du type décrit dans le document de brevet WO 2004/036118 déposée par la déposante.

Selon ce document antérieur, selon un système modulaire, un réacteur peut comprendre une chambre de réaction délimitée horizontalement par des parois verticales, n séparateurs centrifuges pourvus de gaines de sortie de fumées reliant chaque paire de séparateurs à une cage d'échangeurs arrière et une cage d'échangeurs disposée à l'arrière de la chambre, la chambre de réaction ayant chacune de ses parois verticales dites latérales pouvant être commune avec une paroi verticale dite latérale d'un ensemble de n/2 séparateurs.

L'exemple spécifiquement décrit sera le cas où n = 4, mais l'invention s'applique au cas général où n est supérieur ou égal à 2.

Ce réacteur modulaire comporte une chambre de réaction 1 délimitée horizontalement par des parois verticales, comporte également de deux à six séparateurs selon sa taille, l'exemple décrit est avec quatre séparateurs centrifuges 2A à 2D et un élément de récupération de chaleur appelé cage d'échangeurs 3 disposé à l'arrière de la chambre. Ce réacteur comprend des moyens d'introduction d'un gaz de fluidisation dans la chambre de réaction et de maintien d'un lit fluidisé circulant de particules dans cette chambre 1. Il comprend également des moyens de transfert du gaz qui doit être dépoussiéré à partir de la chambre 1 vers les séparateurs 2, des moyens de décharge des particules séparées à partir des séparateurs 2 et des moyens de transfert des gaz dépoussiérés à partir des séparateurs 2 dans la cage d'échangeurs 3. Ce réacteur peut comporter également de deux à six lits, l'exemple décrit est avec quatre lits extérieurs 5A à 5D destinés chacun à recevoir les particules en sortie de chaque séparateur grâce un canal d'alimentation en particules solides et pouvant comporter chacun une paroi commune avec la chambre de réaction 1.

La chambre de réaction 1 a chacune de ses parois verticales dites latérales pouvant être communes avec une paroi verticale dite latérale d'une paire de séparateurs.

Selon l'invention, ce réacteur à lit fluidisé circulant destiné à être alimenté en air est convertible pour pouvoir fonctionner avec un mélange riche en oxygène, de façon efficace et avec un minimum d'opérations de transformation.

De préférence, ce mélange riche en oxygène comporte 70 % d'oxygène et 30 % de dioxyde de carbone recyclé.

Pour ce faire, comme visible les figures 10 à 11, la chambre de réaction 1 comporte au moins une paroi verticale de partition 10 interne partielle, formant deux sous-chambres 1 A et 1 B communicantes entre elles et communicantes chacune avec les séparateurs latéraux. La cage d'échangeurs 3 comporte quant à elle une paroi verticale de partition 30 interne partielle, formant deux sous-cages 3A, 3B communicantes entre elles et communicantes chacune avec les séparateurs.

Cette paroi de partition 10 de la chambre de réaction est parallèle à la paroi frontale S1 de la chambre et cette paroi de partition 30 de la cage d'échangeurs est parallèle à cette paroi de partition 10 de la chambre.

De façon générale, ces parois de partition 10, 30 sont disposées, afin de définir une section transversale d'une dites sous-chambres 1 B et d'une des dites sous-cages 3B correspondante à un fonctionnement par alimentation d'oxygène dans la chambre de réaction.

Avantageusement, la section de l'une des dites sous-chambres 1A est comprise entre 60 et 65 % de la section totale de la chambre 1, la section de l'autre sous-chambre 1B étant comprise entre 35 et 40 %. Avantageusement, la section de l'une des dites sous-cages 3A est comprise entre 60 et 65 % de la section totale de la cage d'échangeurs, la section de l'autre sous-cage 3B étant comprise entre 35 et 40 %.

Ces parois de partition 10, 30, telles que représentées sur les figures, s'étendent du plafond vers le bas et laisse un passage libre dans le bas de la chambre de réaction 1 ou de la cage d'échangeurs 3. En variante, elles peuvent laisser aussi un passage libre dans le haut de la chambre et de la cage ou elles peuvent consister en des parois pourvues de plusieurs ouvertures, réparties ou non sur leur hauteur et disposées sur toute leur largeur ou non.

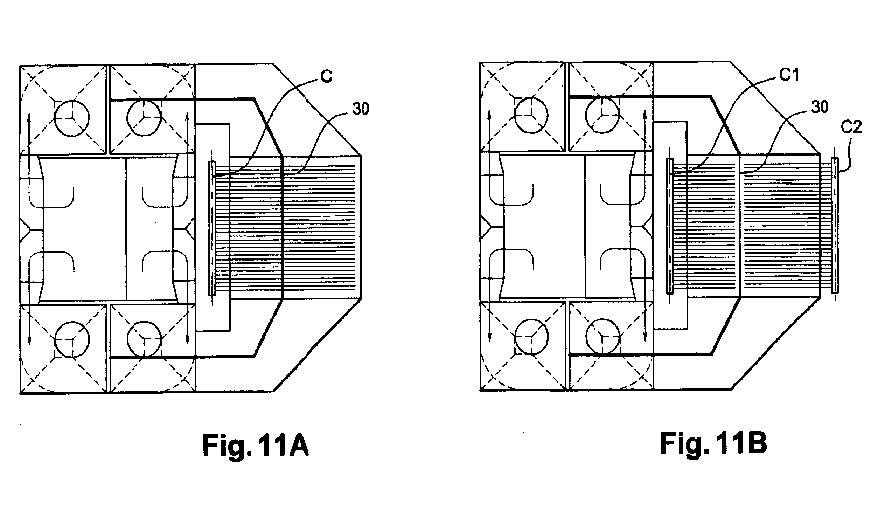

Au sein de la cage 3, les échangeurs peuvent être disposés perpendiculairement à la paroi frontale S1 de la chambre 1 et traverser la paroi de partition 30 de la cage de façon étanche, comme illustré sur la figure 11A. Une seule rangée de collecteur C est alors nécessaire pouvant être disposé sur le bord frontal ou à l'arrière de la cage 3.

Les échangeurs peuvent également être disposés perpendiculairement à la paroi frontale de la chambre 1 et ne pas traverser la paroi de partition 30 de la cage de façon étanche, comme illustré sur la figure 11B. Deux rangées de collecteurs C1 et C2 sont alors nécessaires disposés sur les bords frontal et arrière de la cage 3

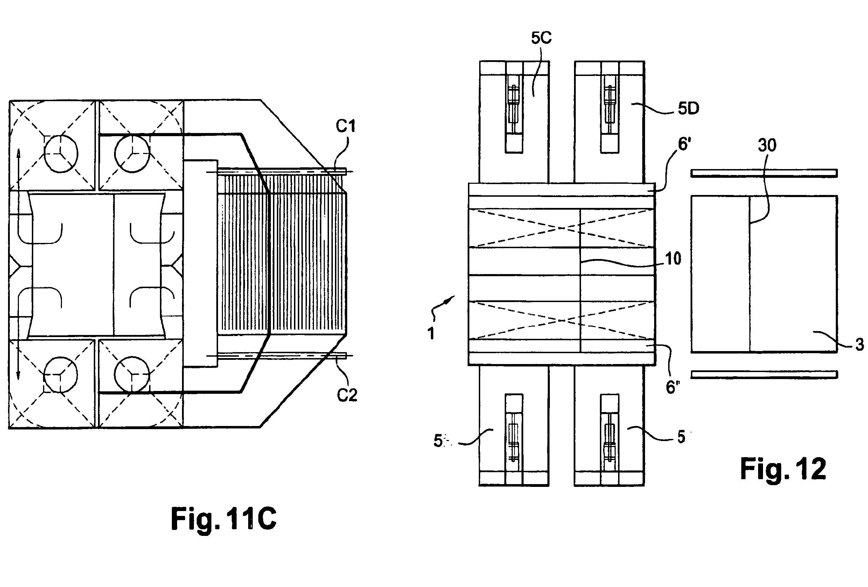

Les échangeurs peuvent enfin être disposés parallèlement à la paroi frontale S1 de la chambre 1 de sorte qu'ils ne traversent pas la paroi de partition 30 de la cage, comme illustré sur la figure 11C. Deux rangées de collecteurs C1, C2 sont alors nécessaires disposés chacun sur un bord latéral de la cage 3.

Selon ce mode de réalisation, la partie basse de la chambre de réaction peut être de type à muret interne formé par un Vé inversé et elle comporte deux soles de fluidisation et deux boîtes à vent 4' et 4 " parallèles, bien visibles sur la figure 9.

Chacune de ces boîtes est divisée en deux sous-boîtes par une paroi disposée dans le même plan vertical que ladite paroi de partition 10 de la chambre de réaction 1.

En variante, il peut suffire qu'elles soient pré-équipées pour être segmentée ultérieurement lors de la conversion du réacteur.

Comme illustré sur la figure 12, deux agencements de siphon latéraux 6' et 6"sont disposés entièrement ou partiellement à l'intérieur la chambre de réaction 1 sur la longueur de la paroi proche des lits ou pouvant être commune avec les lits extérieurs latéraux 5A à 5D de la chambre de réaction 1. En fonctionnement non converti, soit en fonctionnement à l'air, ils n'ont pas de fonction spécifique et ils assurent le passage des solides à partir des lits extérieurs vers la chambre de réaction 1 au moyen d'ouvertures de sortie agencées sur toute la longueur de la chambre de réaction 1. Ils peuvent être installés dès le montage du réacteur, s'il est souhaité de diminuer et de simplifier les modifications à accomplir lors de la conversion du réacteur.

En variante, ces agencements de siphon 6 peuvent être installés ultérieurement lors de la conversion du réacteur.

Les cavités des lits extérieurs 5A à 5D sont surdimensionnés dans leur longueur, afin de présenter de l'espace libre. Comme il sera vu plus loin, des échangeurs de vaporisation et/ou surchauffe seront en effet à ajouter dans ces lits pour permettre la conversion en fonctionnement à l'oxygène et au dioxyde de carbone recyclé.

Comme visible sur la figure 10, les deux gaines de sortie de fumées supérieures reliant chaque paire de séparateurs 2A, 2B et 2C, 2D à la cage d'échangeurs arrière sont équipées d'une paroi de partition verticale et partielle 7, 8 dont le bord arrière est dans le plan de la paroi de partition 30 de la cage d'échangeurs 3.

Par ailleurs, les conduits d'alimentation en combustible sont surdimensionnés, afin de permettre le passage de 100 % du combustible après conversion dans la sous chambre 1 B de combustion. Il en est de même des appareils de transport du combustible qui doivent permettre un débit injecté total après conversion dans la sous chambre 1 B de combustion.

Un réacteur tel que précédemment décrit est destiné à fonctionner avec de l'air. Grâce à certain nombre de modifications qui vont maintenant être décrites, il peut être converti pour fonctionner avec un mélange riche en l'oxygène. Le principe général de cette conversion est d'utiliser une seule sous-chambre de la chambre de réaction en tant que foyer ou sous-chambre de combustion, d'utiliser les deux séparateurs qui lui sont connectés dans leur fonction première de séparation des gaz et des solides, de récupérer les gaz en sortie de ces séparateurs dans une sous-cage de la cage d'échangeurs, de récupérer les solides en sortie de ces séparateurs dans les deux lits extérieurs correspondants connectés aux autres lits extérieurs pour être parcourus en parallèle par les solides chacun avec son lit adjacent et connectés en sortie à ladite chambre de combustion pour pouvoir lui transférer les solides et connectés en sortie à l'autre sous-chambre, dite sous-chambre de refroidissement, pour pouvoir lui transférer le gaz de fluidisation, à savoir préférablement de l'azote.

Pour ce faire, le procédé de conversion d'un réacteur à lit fluidisé circulant tel que décrit ci-dessus, afin de permettre son fonctionnement à l'oxygène et au dioxyde de carbone recyclé, comprend les étapes de transformation suivantes :
- fermeture complète et étanche de la paroi verticale de partition 10 de la chambre de réaction pour former deux sous-chambres indépendantes, l'une 1 B, dite sous-chambre de combustion, de section comprise entre 35 et 40 %, destinée à former une chambre de combustion alimentée en mélange riche en oxygène et l'autre 1A, dite sous-chambre de refroidissement, destinée au refroidissement des gaz de fluidisation des lits extérieurs 5A, 5B, 5C, 5D,
- fermeture complète et étanche de la paroi verticale de partition 30 de la cage pour former deux sous-cages indépendantes 3A, 3B,
- condamnation de l'alimentation en particules solides par les deux séparateurs correspondants 2A et 2C, des deux lits extérieurs 5A et 5C connectés à la sous-chambre de refroidissement 1A ; cette condamnation peut être effectuée par la fermeture de la vanne prévue pour réguler le réacteur en fonctionnement à l'air ou par démontage de cette vanne et obturation du conduit correspondant,
- obturation du passage entre ces deux lit extérieurs 5A et 5C et la sous-chambre de refroidissement 1A,
- de chaque côté de la chambre, raccordement en série des canaux d'alimentation en particules solides tous les lits extérieurs existants à partir du lit extérieur connecté à la sous-chambre de combustion 1B ; une vanne, par exemple celle démontée plus haut, est alors montée en sortie du canal d'alimentation de chaque lit extérieur ayant une paroi commune avec la sous-chambre de combustion 1 B, afin de permettre une alimentation régulée de l'autre lit de chaque paire, les deux lits adjacents sont ainsi parcourus en parallèles par les solides,
- équipement de ce raccordement d'une vanne de régulation.

Lorsque les deux agencements de siphon 6' et 6" ont déjà été installés sur le réacteur avant conversion, ces agencements de siphon sont modifiés selon les opérations suivantes, afin d'assurer la séparation du circuit des solides du circuit des gaz de fluidisation des lits extérieurs, à savoir préférablement de l'azote :
- obturation des ouvertures de sortie de chaque agencement de siphon 6', 6"à l'intérieur de la sous-chambre de refroidissement 1 A,
- réalisation d'ouvertures dans le plafond et/ou dans une paroi à l'entrée de chaque agencement de siphon 6', 6" à l'intérieur de la sous-chambre de refroidissement 1 A,
- fluidisation de chaque agencement de siphon 6', 6" de sorte à assurer un transfert longitudinal des solides dans ces agencements, dans la direction allant des lits 5A, 5C adjacents à la sous-chambre de refroidissement vers les lits 5B, 5D adjacents à la sous-chambre de combustion; cette fluidisation est effectuée par du dioxyde de carbone recyclé et/ou de la vapeur d'eau,

Lorsque l'agencement de siphon n'a pas été installé sur le réacteur fonctionnant à l'air avant conversion, un agencement de siphon avec ses boîtes à vent présentant les caractéristiques ci-dessus, à savoir ouvertures de sortie des solides et ouvertures de sortie des gaz selon la sous-chambre, est installé dans la chambre de réaction.

Au cas où les deux boîtes à vent 4' et 4" n'ont pas été déjà équipées d'une paroi de partition, cette dernière est montée. Seule les deux sous-boîtes situées sous la sous-chambre de combustion 1 B sont utilisées et fluidisées en oxygène et dioxyde de carbone recyclé.

Les parois 7, 8 de partition des gaines de fumées sont obturées à leur extrémité O interne aux cyclones afin que les sous-conduits alimentant la sous-cage 3B ne retiennent qu'une partie des fumées sortant des cyclones 2B, 2D arrière.

Un dispositif d'extraction intermittente des dépôts éventuels de matière peut être prévu dans le bas de la sous chambre 1A de refroidissement et des autres sous- boîtes à vent situées sous la sous-chambre de refroidissement 1A. Un tel dispositif d'extraction peut également être prévu à proximité de l'agencement de siphon en sortie des séparateurs 2A et 2C destinés à être traversés par les gaz de fluidisation des lits extérieurs.

Le procédé de conversion comprend également l'obturation de toutes les alimentations en combustible et en air secondaire de la sous-chambre de refroidissement 1 A, que ces alimentations soient situées dans la chambre de réaction ou dans l'agencement de siphon. Les alimentations en air secondaire de la sous-chambre de combustion 1 B sont quant à elles équipées de cannes d'injection en mélange riche en oxygène.

Des échangeurs de vaporisation et/ou surchauffe supplémentaires, de l'ordre de 10 à 20 %, sont mis en place dans l'espace libre des lits extérieurs 5A, 5B, 5C, 5D. Après conversion et lors du fonctionnement en mélange riche en oxygène, ces échangeurs remplacent la surface d'échange interne à la sous-chambre de refroidissement 1A qui n'est plus utilisée. Ces échangeurs peuvent dégager dans les circuits d'écrans afin d'éviter le recours à une pompe de circulation.

En aval de la cage d'échangeurs 3, le circuit initial des fumées est utilisé pour traiter les gaz évacués à partir des lits extérieurs. Un circuit séparé est ajouté afin de traiter les gaz de combustion contenant du dioxyde de carbone et de la vapeur d'eau et provenant du circuit de combustion du mélange riche en oxygène. Ce circuit ajouté comporte des gaines, des échangeurs gaz gaz, des dispositifs de filtrage, des ventilateurs et des condenseurs vers un train de traitement du dioxyde de carbone avant compression pour transport.

## Revendications

1. Réacteur à lit fluidisé circulant destiné à être alimenté en air et pouvant être converti pour pouvoir fonctionner avec un mélange riche en oxygène, comportant une chambre de réaction (1) délimitée horizontalement par des parois verticales, au moins deux séparateurs centrifuges (2A, 2B) et un élément de récupération de chaleur appelé cage d'échangeurs (3), réacteur comprenant également des moyens d'introduction d'un gaz de fluidisation dans la chambre de réaction au moyen d'au moins une boîte à vent (4) situé sous la chambre de réaction et de maintien d'un lit fluidisé circulant de particules dans cette chambre, des moyens de transfert du gaz qui doit être dépoussiéré à partir de la chambre vers les séparateurs, des moyens de décharge des particules séparées à partir des séparateurs et des moyens de transfert des gaz dépoussiérés à partir des séparateurs dans la cage d'échangeurs, réacteur **caractérisé en ce que**
- ladite chambre de réaction comporte au moins une paroi verticale de partition (10) interne partielle formant deux sous-chambres (1A, 1B) communicantes entre elles et communicantes chacune avec au moins un séparateur,
- ladite cage d'échangeurs comporte une paroi verticale de partition (30) interne partielle formant deux sous-cages (3A, 3B) communicantes entre elles et communicantes chacune avec au moins un séparateur,
ces parois de partition étant disposées, afin de créer une section de passage des gaz de combustion dans une dites sous-chambres et dans une des dites sous-cages correspondant à un fonctionnement par alimentation d'oxygène dans la chambre de réaction.

2. Réacteur selon la revendication 1, **caractérisé en ce que** la section de l'une des dites sous-chambres est comprise entre 60 et 65 % de la section totale de ladite chambre, la section de l'autre sous-chambre étant comprise entre 35 et 40 %, ledit mélange riche en oxygène comportant 70 % d'oxygène et 30 % de dioxyde de carbone recyclé.

3. Réacteur selon l'une des revendications précédentes, **caractérisé en ce que** ladite boîte à vent est divisée en deux sous-boîtes par une paroi disposée dans le même plan que ladite paroi de partition de la chambre de réaction.

4. Réacteur selon l'une des revendications précédentes réacteur comportant également au moins deux lits extérieurs destinés chacun à recevoir les particules en sortie de chaque séparateur grâce un canal d'alimentation en particules solides et comportant chacun une paroi pouvant être commune avec ladite chambre de réaction, **caractérisé en ce qu'**un agencement de siphon est disposé au moins partiellement à l'intérieur ladite chambre sur la longueur de ladite paroi pouvant être commune aux dits lits extérieurs et à ladite chambre de réaction.

5. Réacteur selon la revendication précédente, **caractérisé en ce que** les cavités des dits lits extérieurs sont surdimensionnés, afin de présenter de l'espace libre pour ajout de 10 à 20% de surfaces d'échangeurs.

6. Réacteur selon l'une des revendications précédentes, **caractérisé en ce que** ses conduits d'alimentation en combustible sont surdimensionnés.

7. Réacteur selon l'une des revendications précédentes, comprenant une chambre de réaction délimitée horizontalement par des parois verticales, deux séparateurs centrifuges et une cage d'échangeurs située à l'arrière de la chambre de réaction, les deux séparateurs étant latéraux et présentant chacun une paroi verticale commune avec la paroi latérale de la cage d'échangeurs, **caractérisé en ce que** ladite paroi de partition de ladite chambre est perpendiculaire à la paroi frontale de cette chambre et ladite paroi de partition de ladite cage d'échangeurs est parallèle à cette paroi de partition de ladite chambre.

8. Réacteur selon l'une des revendications 1 à 6, comprenant une chambre de réaction délimitée horizontalement par des parois verticales, n séparateurs centrifuges pourvus de gaines de sortie de fumées reliant chaque paire de séparateurs à une cage d'échangeurs arrière et une cage d'échangeurs disposée à l'arrière de la chambre, n étant supérieur ou égal à 2, la chambre de réaction ayant chacune de ses parois verticales dites latérales pouvant être commune avec une paroi verticale dite latérale d'un ensemble de n/2 séparateurs, **caractérisé en ce que** ladite paroi de partition de ladite chambre est parallèle à la paroi frontale de cette dernière et ladite paroi de partition de ladite cage d'échangeurs est parallèle à cette paroi de partition de ladite chambre.

9. Réacteur selon la revendication 8, **caractérisé en ce que** les deux gaines de sortie de fumées reliant chaque dit ensemble de séparateurs à la cage d'échangeurs arrière sont équipées d'une paroi de partition verticale et partielle.

10. Procédé de conversion d'un réacteur à lit fluidisé circulant selon l'une des revendications précédentes, afin de permettre son fonctionnement à l'oxygène et au dioxyde de carbone recyclé, **caractérisé en ce qu**'il comprend les étapes de transformation suivantes:
- fermeture complète et étanche de ladite paroi verticale de partition (10) de la chambre de réaction pour former deux sous-chambres indépendantes (1A, 1B), l'une, dite sous-chambre de combustion, destinée à former une chambre de combustion alimentée en oxygène et l'autre, dite sous-chambre de refroidissement, destinée au refroidissement des gaz de fluidisation desdits lits extérieurs,
- fermeture complète et étanche de ladite paroi verticale de partition (30) de la cage pour former deux sous-cages indépendantes (3A, 3B).

11. Procédé selon la revendication précédente rattachée à l'une des revendications 4 à 9, **caractérisé en ce qu'**il comporte également les étapes de transformation suivantes:
- condamnation de l'alimentation en particules solides par le ou les séparateurs correspondants, du ou des lit(s) extérieur(s) connecté(s) à ladite sous-chambre de refroidissement,
- obturation du passage entre ce ou ces lit(s) extérieur(s) et ladite sous-chambre de refroidissement,
- de chaque côté de la chambre, raccordement en série des canaux d'alimentation en particules solides de tous les lits extérieurs existants, à partir de l'alimentation du ou des lit(s) extérieur(s) connecté(s) à ladite sous-chambre de combustion,
- équipement de ces raccordements de vannes de régulation.

12. Procédé selon la revendication précédente, **caractérisé en ce qu**'il comporte une étape de mise en place d'un agencement de siphon disposé au moins partiellement à l'intérieur de ladite chambre sur la longueur de ladite paroi pouvant être commune aux dits lits extérieurs et à ladite chambre de réaction, au cas où le réacteur n'en est pas déjà équipé selon la revendication 4.

13. Procédé selon la revendication précédente, **caractérisé en ce qu**'il comprend les étapes de transformation suivantes :
- obturation des ouvertures de sortie du dit agencement de siphon à l'intérieur de ladite sous-chambre de refroidissement,
- réalisation d'ouvertures dans le plafond et/ou des parois du dit agencement de siphon à l'intérieur de ladite sous-chambre de refroidissement,
- fluidisation de l'agencement de siphon de sorte à assurer un transfert longitudinal des solides dans cet agencement.

14. Procédé selon l'une des revendications 10 à 13, **caractérisé en ce qu**'il comprend l'obturation de toutes les alimentations en combustible et en air secondaire de ladite sous-chambre de refroidissement.

## Claims

1. Circulating fluidised bed reactor to be supplied with air and capable of being converted so as to operate with a rich oxygen mixture, comprising a reaction chamber (1), horizontally limited by vertical partitions, at least two centrifugal separators (2A, 2B) and a heat recovery element referred to as the exchanger cage (3), which likewise comprises the means to introduce a fluidisation gas into a reaction chamber through at least one wind box (4), located under the reaction chamber for maintaining a circulating fluidised bed of particles in said chamber, the means of gas transfer, with dust removal from said gas taking place from the chamber towards the separators, the means of separate particle discharge from the separators onwards and the means of transferring the de-dusted gas from the separators to the exchanger cage, where the reactor is **characterised in that**
- the said reaction chamber comprises at least one vertical internal partitioning wall (10) forming two sub-chambers (1A, 1B) which communicate with each other and each communicate with at least one separator
- the said exchanger cage comprises one vertical partitioning wall (30) thus forming two sub-cages (3A, 3B) that communicate with each other and each communicate with at least one separator,
said partitioning walls being arranged in such a way as to create a passage way for the combustion gases to one of the said sub-chambers and to one of the so-called sub-cages, corresponding to an operation of supplying oxygen to the reaction chamber.

2. Reactor according to claim 1, **characterised in that** the section of one of the said sub-chambers comprises between 60 and 65% of the total section of said chamber, whilst the section of the other sub-chamber is between 35 and 40%, with said oxygen-rich mixture comprising 70% oxygen and 30% recycled carbon dioxide.

3. Reactor according to one of the above claims **characterised in that** the said wind box is divided into two sub-boxes by a partition arranged along the same level as the said partitioning wall of the reaction chamber.

4. Reactor according to one of the above claims, where the reactor also comprises at least two external beds, each designed to receive the outgoing particles from each separator through a solid particle feed channel and each comprising a wall that can be common to said reaction chamber, **characterised in that** a siphon arrangement is located, at least partially, inside said chamber over the length of said wall that can be common to the said exterior beds and the said reaction chamber.

5. Reactor according to the above claim **characterised in that** the cavities of the said exterior beds are over-sized so as to provide a free space for adding 10 to 20% of exchanger surfaces.

6. Reactor according to one of the above claims **characterised in that** its fuel supply pipes are over-sized.

7. Reactor according to one of the above claims comprising a reaction chamber that is horizontally limited by vertical walls, two centrifugal separators and an exchanger cage located at the rear of the reaction chamber, with the two separators being to the side and each having a vertical wall common to the side wall of the exchanger cage, **characterised in that** the said partition wall of said chamber is perpendicular to the front wall of this chamber and that said partition wall of said exchanger cage runs parallel to the partition wall of said chamber.

8. Reactor according to any of the claims 1 to 6, comprising a reaction chamber that is horizontally limited by vertical partitions, n centrifugal separators with sheathed smoke outlets linking each pair of separators to a rear exchanger cage and an exchanger cage located to the rear of the chamber, where n is greater than or equal to 2, with the reaction chambers each having vertical so-called side walls that may be common to a so-called lateral vertical wall of a series of n/2 separators, **characterised in that** the said partition wall of the chamber runs parallel with the front wall of this latter and said partition wall of the said exchanger cage runs parallel to this partition wall of said chamber.

9. Reactor according to claim 8, **characterised in that** the two sheathed smoke outlets each connecting a series of separators to the rear exchanger cage have one vertical and partial partitioning wall.

10. Process of converting a circulating fluidised bed reactor according to the above claims, so as to enable its operation with oxygen and recycled carbon dioxide, **characterised in that** it comprises the following conversion stages:
- complete closing and sealing of the said vertical partitioning wall (10) of the reaction chamber so as to create two independent sub-chambers (1A, 1B) with the one so-called combustion sub-chamber being designed to form a combustion chamber supplied with oxygen and the other, the so-called cooling sub-chamber being designed to cool down the fluidisation gases of said exterior beds,
- complete closing and sealing of the said vertical partitioning wall (30) of the cage to form two independent sub-cages (34, 38).

11. Process according to the above claim and associated with one of the claims 4 to 9, **characterised in that** it also comprises the following conversion stages:
- interrupting the supply of solid particles by the appropriate separator(s) from the exterior bed(s) connected to said cooling sub-chamber,
- blocking the passage between this/these exterior bed(s) and said cooling sub-chamber
- from each side of the chamber, connecting the solid particle supply channels in series from all the exterior beds from the supply from the exterior bed(s) connected to said combustion sub-chamber,
- fitting these connections with control valves.

12. Process according to the above claim, **characterised in that** it comprises a stage for fitting a siphon arranged at least partially inside said chamber over the length of said wall that could be common to said exterior beds and the said reaction chamber, where the reactor is not fitted with one, as according to claim 4.

13. Process according to the above claim, **characterised in that** it comprises the following conversion stages:
- blocking the outlet openings of said siphon arrangement to the inside of said cooling sub-chamber
- provision of openings in the ceiling and/or walls of said siphon arrangement inside the said cooling sub-chamber,
- fluidisation of the siphon arrangement so as to ensure the longitudinal transfer of solids within said arrangement.

14. Process according to one of the claims 10 to 13, **characterised in that** it comprises the sealing of all fuel and secondary air supplies from the said cooling sub-chamber.

## Patentansprüche

1. Zirkulierende Wirbelschichtfeuerungsanlage für den luftversorgten Betrieb und umwandelbar, um mit einem sauerstoffreichen Gemisch betrieben zu werden, mit einer in horizontaler Richtung durch senkrechte Wände abgegrenzten Reaktionskammer (1), mindestens zwei Zentrifugalabscheidern (2A, 2B) und einem Wärmetauscher mit der Bezeichnung Wärmetauscherzelle (3), Feuerungsanlage mit des weiteren Mitteln zur Einleitung eines Fluidisierungsgases in die Reaktionskammer mittels mindestens einem Luftkasten (4) unterhalb der Reaktionskammer zur Aufrechterhaltung eines zirkulierenden Wirbelbetts aus Partikeln in dieser Kammer, Mitteln zur Weiterleitung des zu entstaubenden Gases von der Kammer zu den Abscheidern, Mitteln zum Austragen der aus den Abscheidern in der Wärmetauscherzelle abgeschiedenen Partikel, Reaktor **dadurch gekennzeichnet, dass**
- die besagte Reaktionskammer mindestens eine partielle senkrechte innere Teilungswand (10) aufweist, die zwei miteinander und jeweils mit mindestens einem Abscheider kommunizierende Teilkammern (1A,1B) bildet,
- die besagte Wärmetauscherzelle mindestens eine partielle senkrechte innere Teilungswand (30) aufweist, die zwei miteinander und jeweils mit mindestens einem Abscheider kommunizierende Teilkammern (3A,3B) bildet,
wobei diese Teilungswände so angeordnet sind, dass sie einen Querschnitt für den Durchlauf der Verbrennungsgase in eine der besagten Teilkammern bilden sowie in eine der besagten Teilzellen, die für den Betrieb mit Sauerstoffzufuhr in der Reaktionskammer vorgesehen ist.

2. Feuerungsanlage nach Anspruch 1, **dadurch gekennzeichnet, dass** der Querschnitt der einen der besagten Teilkammern zwischen 60 und 65% des Gesamtquerschnitts der besagten Kammer beträgt, während der Querschnitt der anderen Teilkammer zwischen 35 und 40% liegt, wobei das besagte sauerstoffreiche Gemisch 70% Sauerstoff und 30% recyceltes Kohlenstoffdioxid beträgt.

3. Feuerungsanlage nach einem der vorigen Ansprüche, **dadurch gekennzeichnet, dass** der besagte Luftkasten durch eine in der gleichen Ebene wie die besagte Teilungswand der Reaktionskammer angeordnete Wand in zwei Teilkästen unterteilt ist.

4. Feuerungsanlage nach einem der vorigen Ansprüche, mit des weiteren mindestens zwei äußeren Fließbetten zur jeweiligen Aufnahme der aus jedem Abscheider austretenden Partikel über einen Zufuhrkanal der Feststoffpartikel, wovon jedes eine Wand aufweist, die mit der besagten Reaktionskammer gemeinsam sein kann, **dadurch gekennzeichnet, dass** eine Siphon-Einrichtung mindestens teilweise innerhalb der besagten Kammer längs der besagten Wand angeordnet ist, die mit den besagten äußeren Fließbetten und der besagten Reaktionskammer gemeinsam sein kann.

5. Feuerungsanlage nach dem vorigen Anspruch, **dadurch gekennzeichnet, dass** die Hohlräume der besagten äußeren Fließbetten überdimensioniert sind, um einen Freiraum für weitere 10 bis 20% Austauscherfläche aufzuweisen.

6. Feuerungsanlage nach einem der vorigen Ansprüche, **dadurch gekennzeichnet, dass** die Brennstoffzufuhrkanäle überdimensioniert sind.

7. Feuerungsanlage gemäß einem der vorigen Ansprüche, mit einer in horizontaler Richtung durch senkrechte Wände abgegrenzten Reaktionskammer, zwei Zentrifugalabscheidern und einer Wärmetauscherzelle, die sich im hinteren Bereich der Reaktionskammer befindet, wobei die beiden Abscheider seitlich sind und jeweils eine mit der Seitenwand der Wärmetauscherzelle gemeinsame senkrechte Wand aufweisen, **dadurch gekennzeichnet, dass** die besagte Teilungswand der besagten Kammer rechtwinklig zur Stirnwand dieser Kammer und die besagte Teilungswand der besagten Wärmetauscherzelle parallel zu dieser Teilungswand der besagten Kammer angeordnet sind.

8. Feuerungsanlage nach einem der Ansprüche 1 bis 6, mit einer in horizontaler Richtung durch senkrechte Wände abgegrenzten Reaktionskammer, mit n Zentrifugalabscheidern mit Rauchgasabzugschächten, die jedes Abscheiderpaar mit einer hinteren Wärmetauscherzelle und einer im hinteren Bereich der Kammer angeordneten Wärmetauscherzelle verbindet, wobei n größer oder gleich 2 ist, wobei die Reaktionskammer jede ihrer besagten seitlichen Wände mit einer so genannten seitlichen senkrechten Wand einer Gruppe von n/2 Abscheidern gemeinsam hat, **dadurch gekennzeichnet, dass** die besagte Teilungswand der besagten Kammer parallel zur Stirnwand dieser letzteren ist und die besagte Teilungswand der besagten Wärmetauscherzelle parallel zu dieser Teilungswand der besagten Kammer ist.

9. Feuerungsanlage nach Anspruch 8, **dadurch gekennzeichnet, dass** die beiden Rauchabzugsschächte, die jede so genannte Gruppe von Abscheidern mit der hinteren Wärmetauscherzelle verbinden, mit einer senkrechten partiellen Teilungswand versehen sind.

10. Verfahren zur Umwandlung einer zirkulierenden Wirbelschichtfeuerungsanlage nach einem der vorigen Ansprüche, um ihren Betrieb mit Sauerstoff oder rezykliertem Kohlenstoffdioxid zu ermöglichen, **dadurch gekennzeichnet, dass** es folgende Umwandlungsschritte beinhaltet:
- vollständiges luftdichtes Abschließen der besagten senkrechten Teilungswand (10) der Reaktionskammer zur Bildung von zwei separaten Teilkammern (1A,1B), wobei die eine so genannte Verbrennungs-Teilkammer als Verbrennungskammer mit Sauerstoffzufuhr dient und die andere so genannte Abkühlkammer für die Abkühlung der Fluidisierungsgase der besagten äußeren Fließbetten,
- vollständiges luftdichtes Abschließen der besagten senkrechten Teilungswand (30) der Wärmetauscherzelle zur Bildung von zwei separaten Teilkammern (3A, 3B)

11. Verfahren nach vorigem mit einem der Ansprüche 4 bis 9 verbundenen Anspruch, **dadurch gekennzeichnet, dass** es auch noch folgende Umwandlungsschritte beinhaltet:
- Verriegelung der Zufuhr von Feststoffpartikeln durch den oder die entsprechenden Abscheider des oder der an die besagte Abkühl-Teilkammer angeschlossenen äußeren Fließbetten,
- Absperrung des Durchlaufs zwischen diesem oder diesen äußeren Fließbett(en) und der besagten Abkühl-Teilkammer,
- beidseitig der Kammer Serienanschluss der Zufuhrschächte von Feststoffpartikeln aus allen vorhandenen äußeren Fließbetten, ausgehend vom Zufuhrschacht des oder der an die besagte Verbrennungs-Teilkammer angeschlossenen äußeren Fließbettes(-betten),
- Ausrüstung dieser Anschlüsse mit Stellventilen.

12. Verfahren nach vorigem Anspruch, **dadurch gekennzeichnet, dass** es einen Einbauschritt für eine Siphon-Einrichtung aufweist, die mindestens teilweise innerhalb der besagten Kammer längs der besagten Wand angeordnet ist, welche mit den so genannten äußeren Fließbetten und der besagten Reaktionskammer gemeinsam sein kann, falls die Feuerungsanlage nicht schon gemäß Anspruch 4 ausgestattet ist.

13. Verfahren nach vorigem Anspruch, **dadurch gekennzeichnet, dass** es folgende Umwandlungsschritte beinhaltet::
- Absperrung der Austrittsöffnungen der so genannten Siphon-Einrichtung innerhalb der besagten Abkühl-Teilkammer,
- Ausführung von Öffnungen in der Decke und/oder den Wänden der besagten Siphonanlage innerhalb der besagten Abkühlkammer,
- Fluidisierung der Siphonanlage, so dass in dieser Anlage ein longitudinaler Transfer der Festkörper sichergestellt ist.

14. Verfahren nach einem der Ansprüche 10 bis 13, **dadurch gekennzeichnet, dass** es eine Absperrung aller Brennstoff- und Sekundärluft-Zuleitungen der besagten Abkühl-Teilkammer aufweist.
